# EUROPEAN PATENT APPLICATION

(11) **EP 4 567 985 A1**
(43) Date of publication of application: **11.06.2025**
(21) Application number: 24212670.4
(22) Date of filing: 13.11.2024
(51) Int. Cl.: H01M 50/213, H01M 50/22, H01M 50/227, H01M 50/503, H01M 50/505, H01M 50/51, H01M 50/55, H01M 50/559, H01M 50/566

(54) **RECHARGEABLE BATTERY MODULE**

(30) Priority: 07.12.2023 KR 20230176935
(71) Applicant: SAMSUNG SDI CO., LTD., Yongin-si, Gyeonggi-do 17084 (KR)
(72) Inventor: KIM, Sangmyeong, Yongin-si, Gyeonggi-do 17084 (KR); YEOM, Gilchoun, Yongin-si, Gyeonggi-do 17084 (KR); LEE, Kilseok, Yongin-si, Gyeonggi-do 17084 (KR); KIM, Jungsoo, Yongin-si, Gyeonggi-do 17084 (KR)
(74) Representative: Meissner Bolte Partnerschaft mbB

(57) **Abstract**

A rechargeable battery module is provided. The rechargeable battery module includes a cell holder accommodating a plurality of battery cells, a busbar holder disposed above the battery cells, and busbars that is insert injection-molded into the busbar holder and protrude from the busbar holder. The bus bars are welded to negative electrode terminals and positive electrode terminals of the battery cells.

## Description

### BACKGROUND

### (a) Field

The present disclosure relates to a rechargeable battery module, and more particularly, to a rechargeable battery module that has mechanical strength and a current-carrying environment by welding a battery cell and a busbar.

### (b) Description of the Related Art

Unlike primary batteries, rechargeable batteries are batteries that repeatedly charge and discharge. Small-capacity rechargeable batteries are used in small, portable electronic devices such as mobile phones, laptop computers, and camcorders. High-capacity and high-density rechargeable batteries are used as power sources for driving motors in hybrid and electric vehicles or for energy storage. Rechargeable batteries may be used by forming a rechargeable battery module including a plurality of battery cells connected in series and/or parallel to drive a motor of, for example, a hybrid vehicle that requires relatively high energy density.

Rechargeable battery modules use busbars made of aluminum, copper, and nickel, which have high electrical conductivity, for electrical connection between battery cells. Since the connection method is different from that of the materials forming the electrode of the battery cells (for example, steel, aluminum, and copper), the rechargeable battery modules are melted to perform a heterojunction. In such a case, voids and cracks are generated due to differences in thermal conductivity or thermal expansion coefficient of the two different materials and the formation of intermetallic compounds, which lower the quality of the welding part.

### SUMMARY OF THE DISCLOSURE

The present disclosure seeks to provide a rechargeable battery module capable of improving the quality of the welding part of a battery cell and a busbar.

A rechargeable battery module according to the invention includes a cell holder accommodating a plurality of battery cells, a busbar holder disposed above the battery cells, and busbars that are injection-molded into the busbar holder and protrude from the busbar holder, the busbars being welded to negative electrode terminals and positive electrode terminals of the battery cells.

Each of the busbars may include an aluminum plate and a nickel sheet.

The negative electrode terminals and the positive electrode terminals may be disposed on the same side of the battery cells, and the positive electrode terminals may protrude from centers of the negative electrode terminals.

Each of the busbars may include a positive electrode connector welded to a positive electrode terminal of a first of the two adjacent battery cells, and a negative electrode connector welded to a negative electrode terminal of a second of the two adjacent battery cells.

The positive electrode connector may be formed as a circular plate corresponding to the positive electrode terminal, and the negative electrode connector may be formed as an arc-shaped plate with a width corresponding to a partial region of the negative electrode terminal.

The negative electrode connector may partially correspond to half of a band-shaped area of the negative electrode terminal.

The positive electrode connector may be formed of an aluminum plate, and the negative electrode connector may include an aluminum plate and a nickel sheet.

The negative electrode terminal may be made of steel, and the nickel sheet of the busbar may be melted to form a nickel layer that is spread to the aluminum plate and the steel of the negative electrode terminal.

The nickel layer is spread deeper into the aluminum plate than into the steel of the negative electrode terminal.

The thickness of the nickel sheet may be 0.1 mm to 0.3 mm.

The busbar holder may be made of synthetic resin material, and may include first opening parts corresponding to the positive electrode terminals, and second opening parts corresponding to the negative electrode terminals the first opening parts and second opening parts being separated by partition walls outside of the first opening parts.

The busbar holder may further include position-fixing protrusions that protrude from outside of the second opening parts toward the cell holder, the position-fixing protrusions being inserted between the adjacent battery cells, and the position-fixing protrusions contacting an upper surface of the cell holder.

In the busbars, positive electrode connectors are welded to the positive electrode terminals and may protrude into the first opening parts of the busbar holder, and negative electrode connectors are welded to the negative electrode terminals may protrude from the busbar holder to the second opening part, and may be bent downward to contact the negative electrode terminals.

Each of the negative electrode connectors may further include an interconnector that is bent downward and bent upward, the interconnector being connected to an adjacent negative electrode connector and protruding through one of the second opening parts.

The busbar may be manufactured as an intermediate product by using an aluminum plate and a nickel sheet through press-fitting, laser welding, or clad processing, which may then be insert injection-molded.

The busbar may be manufactured as an intermediate product by plating or depositing nickel on an aluminum plate to form a nickel layer, which may then be insert injection-molded.

According to a rechargeable battery module of an embodiment, a busbar including an aluminum plate and a nickel sheet is protruded from a busbar holder by insert injection-molding and welded to the negative and positive electrode terminals of the battery cells, so that the nickel sheet may be melted and the aluminum plate may be welded to the electrode terminals to form a strong mechanical strength and current-carrying structure.

In addition, according to the embodiment, the nickel metal layer made of the nickel sheet of the busbar is disposed between the electrode terminal and the aluminum plate, which may increase the junction strength of the welding part and produce an intermetallic compound with a very slow long-term growth rate, thus ensuring the long life of the rechargeable battery module.

### BRIEF DESCRIPTION OF THE DRAWINGS

FIG. 1 is a perspective view of a rechargeable battery module according to an embodiment of the present disclosure.
FIG. 2 is an exploded perspective view of a rechargeable battery module according to an embodiment of the present disclosure.
FIG. 3 is a perspective view of a busbar holder of FIG. 2.
FIG. 4 is a cross-sectional view taken along line IV-IV of FIG. 3.
FIG. 5 is a top plan view illustrating the arrangement relationship between a battery cell, a busbar holder, and a busbar.
FIG. 6 is a top plan view illustrating the relationship between the negative and positive electrode terminals of the battery cell, and the negative and positive electrode connectors of the busbar in FIG. 5.
FIG. 7 is a cross-sectional image of the welding state of the negative electrode terminal of the battery cell and the busbar.

### DETAILED DESCRIPTION OF THE EMBODIMENTS

Hereinafter, the present disclosure will be described more fully with reference to the accompanying drawings, in which exemplary embodiments are shown. As those skilled in the art would realize, the described embodiments may be modified in various ways without departing from the spirit or scope of the present disclosure. The drawings and description are to be regarded as illustrative in nature and not restrictive, and like reference numerals designate like elements throughout the specification.

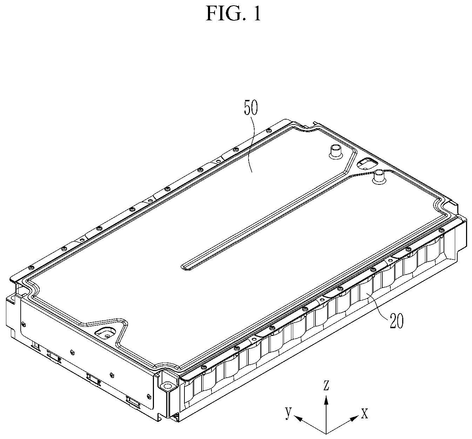

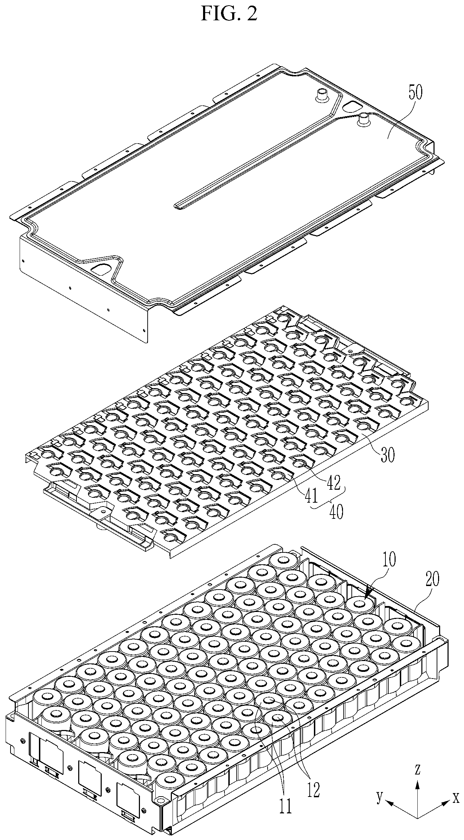

FIG. 1 is a perspective view of a rechargeable battery module according to an embodiment of the present disclosure, and FIG. 2 is an exploded perspective view of a rechargeable battery module according to an embodiment of the present disclosure. Referring to FIGS. 1 and 2, a rechargeable battery module of an embodiment includes a plurality of battery cells 10 formed of rechargeable batteries, a cell holder 20 accommodating the battery cells 10, a busbar holder 30 disposed above the cell holder 20, and a busbar 40 that is insert injection-molded into the busbar holder 30.

The rechargeable battery module accommodates the battery cells 10 in the cell holder 20, electrically connects the battery cells 10 through the busbar 40 that is insert injection-molded into the busbar holder 30, and further includes a top cover 50 covering the busbar holder 30. The top cover 50 protects the busbar holder 30 and the electrical connection of the battery cells 10 by the busbars 40.

The plurality of battery cells 10 are each made of a cylindrical rechargeable battery, and are each provided with a negative electrode terminal 11 and a positive electrode terminal 12 on one side of the cylindrical rechargeable battery in the axial direction. As seen in FIG. 2, the negative electrode terminal 11 and the positive electrode terminal 12 are disposed above the rechargeable battery module. That is, the negative electrode terminal 11 and the positive electrode terminal 12 are disposed on the same side of the battery cell 10, and the positive electrode terminal 12 is disposed in an insulating structure at the center of the negative electrode terminal 11, which is formed to protrude more than the negative electrode terminal 11.

The cell holder 20 has a honeycomb structure formed therein to accommodate a plurality of battery cells 10 spaced apart in a first direction (x-axis direction) and a second direction (y-axis direction) crossing the first direction. The battery cells 10 are inserted into the cell holder 20 in a third direction (z-axis direction) crossing the first and second directions.

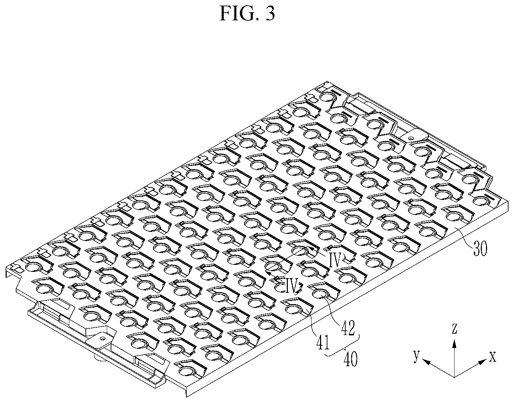

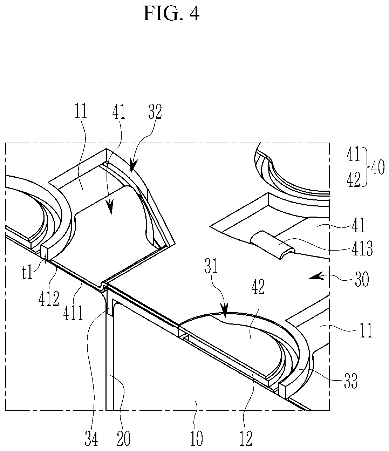

FIG. 3 is a perspective view of a busbar holder of FIG. 2, and FIG. 4 is a cross-sectional view taken along line IV-IV of FIG. 3. Referring to FIGS. 3 and 4, the busbar holder 30 is insert injection-molded with a synthetic resin material and includes a first opening part 31 and a second opening part 32. The first opening part 31 corresponds to the positive electrode terminal 12, and the second opening part 32 is separated by a partition wall 33 on the outside of the first opening part 31 and open to correspond to the negative electrode terminal 11.

Therefore, when the busbar holder 30 is disposed above the battery cells 10, the positive electrode terminal 12 is exposed through the first opening part 31 to enable laser welding of the positive electrode terminal 12 with the busbar 40. The negative electrode terminal 11 is exposed through the second opening part 32 to enable laser welding of the negative electrode terminal 11 with the busbar 40.

In addition, the busbar holder 30 further includes a fixing protrusion 34 protruding from the outside of the second opening part 32 toward the cell holder 20. The fixing protrusion 34 is inserted between adjacent battery cells 10 and contacts an upper surface of the cell holder 20. That is, the busbar holder 30 may be fixed at a set position above the cell holder 20.

When the busbar holder 30 is injection-molded, the busbars 40 are inserted into the busbar holder 30 to thereby be integrally formed with the busbar holder 30. For insert injection-molding, the busbars 40 may be used in the injection molding process of the busbar holder 30 after manufacturing an intermediate product by using an aluminum plate and a nickel sheet through press-fitting, laser welding, or clad processing. Additionally, the busbars 40 may be used in the injection-molding process of the busbar holder 30 after manufacturing an intermediate product in which a nickel layer is formed by plating or depositing nickel on an aluminum plate.

Each of the busbars 40 is configured to protrude from the busbar holder 30 in an insert injection-molded state and be welded to the negative electrode terminals 11 and the positive electrode terminals 12 of adjacent battery cells 10.

In each of the battery cells 10, the negative electrode terminal 11 and the positive electrode terminal 12 are made of different materials. For example, the negative electrode terminal 11 may be made of a steel material that forms a case of the battery cell 10, and the positive electrode terminal 12 may be made of an aluminum material.

Each of the busbars 40 connecting the negative electrode terminal 11 and the positive electrode terminal 12 made of different materials must be formed to maintain mechanical strength and a current-carrying environment. For example, the busbar 40 may include an aluminum plate 411 and a nickel sheet 412. Each of the busbars 40 includes a positive electrode connector 42 welded to the positive electrode terminal 12 of one of the two neighboring battery cells 10 and a negative electrode connector 41 welded to the negative electrode terminal 11 of the other of the two neighboring battery cells 10. Accordingly, the battery cells 10 are connected in series.

The positive electrode connector 42 is formed as a circular plate corresponding to the positive electrode terminal 12, and the negative electrode connector 41 is formed as an arc-shaped plate with a width W corresponding to a partial region of the negative electrode terminal 11. The negative electrode connector 41 partially corresponds to half of the band-shaped area of the negative electrode terminal 11. The remaining half of the band-shaped area of the negative electrode terminal 11 is covered with the busbar holder 30. Therefore, the negative electrode connector 41 may be welded at a area corresponding to the uncovered half area of the busbar holder 30.

The positive electrode connector 42 is formed of an aluminum plate. That is, the positive electrode connector 42 does not include the nickel sheet 412. In an embodiment, the positive electrode terminal 12 is made of aluminum, the positive electrode connector 42 is made of aluminum and welded together using the same material.

In comparison, the negative electrode connector 41 is formed including the aluminum plate 411 and the nickel sheet 412. A thickness t1 of the nickel sheet 412 may be 0.1 mm to 0.3 mm. Since the negative electrode terminal 11 is made, for example, of 0.8 mm steel, the nickel sheet 412 induces solid welding between the aluminum plate 411 and the negative electrode terminal 11. If the thickness t1 of the nickel sheet 412 is less than 0.1 mm, the nickel melted during welding may not be sufficiently absorbed into the aluminum plate 411 and the negative electrode terminal 11 to sufficiently form a mechanical connection and a current-carrying structure. If the thickness t1 of the nickel sheet 412 exceeds 0.3 mm, the nickel melted during welding may be sufficiently absorbed into the aluminum plate 411 and the negative electrode terminal 11 to form a mechanical connection and a current-carrying structure. However, the manufacturing cost may increase due to the use of large quantities of nickel, which may be expensive. Thus, a thickness t1 in the range of 0.1 mm to 0.3 mm allows the nickel melted during welding to be sufficiently absorbed into the aluminum plate 411 and the negative electrode terminal 11 to sufficiently form a mechanical connection and a current-carrying structure, while also preventing the manufacturing cost from rising due to the use of large quantities of nickel.

In each of the busbars 40, the positive electrode connector 42 welded to the positive electrode terminal 12 extends and protrudes into the region of the first opening part 31 of the busbar holder 30 and is disposed on the positive electrode terminal 12. The negative electrode connector 41 welded to the negative electrode terminal 11 protrudes from the busbar holder 30 to the second opening part 32 and is bent downward to contact the negative electrode terminal 11.

The negative electrode connector 41 further includes an interconnector 413 that is bent downward and then bent upward, and is connected in a direction crossing the direction protruding to the second opening part 32 to be connected to another neighboring negative electrode connector 41. Accordingly, the battery cells 10 may be connected in parallel. That is, the busbars 40 may be connected the battery cells 10 in series and in parallel.

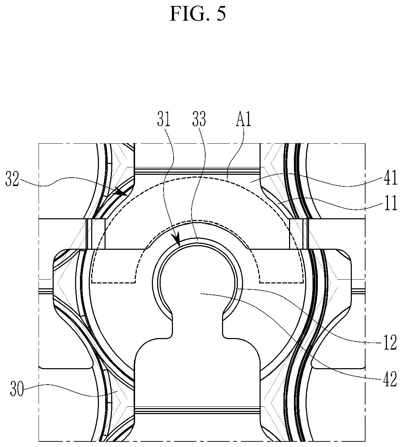

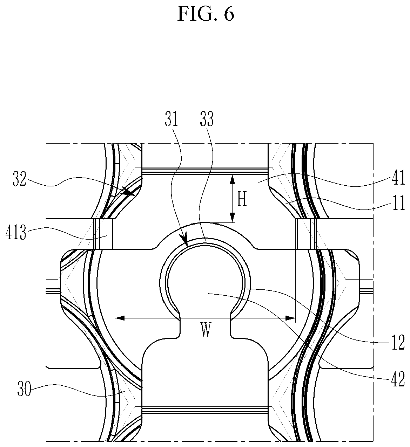

FIG. 5 is a top plan view illustrating the arrangement relationship between a battery cell, a busbar holder, and a busbar, and FIG. 6 is a top plan view showing the relationship between the negative and positive electrode terminals of the battery cell, and the negative and positive electrode connectors of the busbar in FIG. 5.

Referring to FIG. 5 and FIG. 6, half of the area of the negative electrode terminal 11, which is formed in a ring shape on the outside of the positive electrode terminal 12, is covered with the busbar holder 30, and the remaining half is a weldable region A1 that may be connected to and welded to the negative electrode connector 41.

The negative electrode connector 41 is formed smaller than the weldable region A1 to facilitate welding of the negative electrode connector 41 to the negative electrode terminal 11. The negative electrode connector 41 has an arc shape that spreads out on both sides with the positive electrode terminal 12 at the center.

The negative electrode connector 41 may have a width W that is less than a diameter D of the battery cell 10, and the width W may be set to 10 mm to 36 mm, The negative electrode connector 41 may have a height H that protrudes from the second opening part 32 of the busbar holder 30, and the height H is less than a radius D/2 of the battery cell 10 and may be set to 8 mm to 15 mm. If the width W is less than 10 mm, the area connected to the negative electrode terminal 11 may be too small, and thus the mechanical connection and electrical current-carrying structure may not be sufficiently formed. If the width W exceeds 36 mm, there is sufficient connection area with the negative electrode terminal 11, but interference with the second opening part 32 may occur. If the height H is less than 8 mm, the area connected to the negative electrode terminal 11 is too small, and thus the mechanical connection and electrical current-carrying structure may not be sufficiently formed. If the height H exceeds 15 mm, interference with the partition wall 33 and the second opening part 32 may occur.

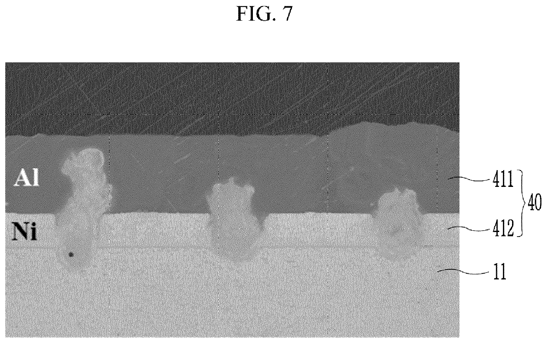

FIG. 7 is a cross-sectional image of the welding state of the negative electrode terminal of a battery cell and a busbar. Referring to FIG. 7, the negative electrode terminal 11 is made of steel. During laser welding, the nickel sheet 412 of the busbar 40 melts and spreads to the aluminum plate 411 and the steel of the negative electrode terminal 11 to form a nickel layer. Thus, as the busbar 40 is welded to the negative electrode terminal 11, the nickel layer provides a strong mechanical strength and a current-carrying environment.

At this time, the nickel layer formed by melting the nickel sheet 412 spreads deeper into the aluminum plate 411 than into the steel of the negative electrode terminal 11. The nickel layer strengthens the welding between the busbar 40 and the negative electrode terminal 11 while minimizing damage to the negative electrode terminal 11. Because the nickel metal layer formed by the nickel sheet 412 of the busbar 40 is disposed between the negative electrode terminal 11 and the aluminum plate 411, the junction strength of the welding part may be increased, and an intermetallic compound with a very slow long-term growth rate is produced, thereby ensuring long life of the rechargeable battery module.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**<Description of symbols>**

| | | | |
|---|---|---|---|
| 10: | Battery cell | 11: | Negative electrode terminal |
| 12: | Positive electrode terminal | 20: | Cell holder |
| 30: | Busbar holder | 31: | First opening part |
| 32: | Second opening part | 33: | Partition wall |
| 34: | Fixing protrusion | 40: | Busbars |
| 41: | Negative electrode connector | 42: | Positive electrode connector |
| 50: | Top cover | 411: | Aluminum plate |
| 412: | Nickel sheet | 413: | Interconnector |
| D: | Diameter | H: | Height |
| t1: | Thickness | W: | Width |

## Claims

1. A rechargeable battery module comprising:
a cell holder (20) accommodating a plurality of battery cells (10);
a busbar holder (30) disposed above the battery cells (10); and
busbars (40) that are insert injection-molded into the busbar holder (30) and protrude from the busbar holder (30), the busbars (40) being welded to negative electrode terminals (11) and positive electrode terminals (12) of the battery cells (10).

2. The rechargeable battery module as recited in claim 1, wherein each of the busbars (40) comprises an aluminum plate (411) and a nickel sheet (412).

3. The rechargeable battery module as recited in claim 1 or claim 2, wherein the negative electrode terminals (11) and the positive electrode terminals (12) are disposed on the same side of the battery cells (10), and the positive electrode terminals (12) protrude from centers of the negative electrode terminals (11).

4. The rechargeable battery module as recited in any one of the preceding claims, wherein each of the busbars (40) comprises (i) a positive electrode connector (42) welded to a positive electrode terminal (12) of a first of two adjacent battery cells (10), and (ii) a negative electrode connector (41) welded to a negative electrode terminal (11) of a second of the two adjacent battery cells (10).

5. The rechargeable battery module as recited in claim 4, wherein the positive electrode connector (42) is formed as a circular plate corresponding to the positive electrode terminal (12), and the negative electrode connector (41) is formed as an arc-shaped plate with a width (W) corresponding to a partial region of the negative electrode terminal (11).

6. The rechargeable battery module as recited in claim 4 or claim 5, wherein the negative electrode connector (41) partially corresponds to half of a band-shaped area of the negative electrode terminal (11).

7. The rechargeable battery module as recited in any one of claims 4 to 6, wherein the positive electrode connector (42) is formed of an aluminum plate, and the negative electrode connector (41) comprises an aluminum plate (411) and a nickel sheet (412),
optionally wherein a thickness (t1) of the nickel sheet (412) is 0.1 mm to 0.3 mm.

8. The rechargeable battery module as recited in claim 7, wherein
the negative electrode terminal (11) is made of steel, and
wherein, the nickel sheet (412) of the busbar (40) is melted to form a nickel layer that is spread to the aluminum plate (411) and the steel of the negative electrode terminal (11).

9. The rechargeable battery module as recited in claim 8, wherein the nickel layer is spread deeper into the aluminum plate (411) than into the steel of the negative electrode terminal (11).

10. The rechargeable battery module as recited in any one of the preceding claims, wherein
the busbar holder (30) is made of synthetic resin material, and the busbar holder (30) comprises (i) first opening parts (31) corresponding to the positive electrode terminals (12) and (ii) second opening parts (32) corresponding to the negative electrode terminals (11), the first opening parts (31) and second opening parts (32) being separated by partition walls (33) outside of the first opening parts (31).

11. The rechargeable battery module as recited in claim 10, wherein the busbar holder (30) further comprises position-fixing protrusions (34) that protrude from outside of the second opening parts (32) toward the cell holder (20), with the position-fixing protrusions (34) being inserted between the adjacent battery cells (10), and the position-fixing protrusions (34) contacting an upper surface of the cell holder (20).

12. The rechargeable battery module as recited in claim 10 or claim 11, wherein
in the busbars (40), (i) positive electrode connectors (42) are welded to the positive electrode terminals (12) and protrude into the first opening parts (31) of the busbar holder (30), and (ii) negative electrode connectors (41) are welded to the negative electrode terminals (11), protrude from the busbar holder (30) to the second opening parts (32), and are bent downward to contact the negative electrode terminals (11).

13. The rechargeable battery module as recited in any one of claims 10 to 12, wherein each of the negative electrode connectors (41) further comprises an interconnector (413) that is bent downward and bent upward, the interconnector (413) being connected to an adjacent negative electrode connector (41) and protruding through one of the second opening parts (32).

14. A method of manufacturing the rechargeable battery module as recited in any one of the preceding claims, wherein the busbar (40) is formed as an intermediate product by using an aluminum plate (411) and a nickel sheet (412) through press-fitting, laser welding, or clad processing, and the intermediate product is insert injection-molded.

15. A method of manufacturing the rechargeable battery module as recited in any one of claims 1 to 13, wherein the busbar (40) is formed as an intermediate product by plating or depositing nickel on an aluminum plate (411) to form a nickel layer, and the intermediate product is insert injection-molded.
